# EUROPÄISCHE PATENTSCHRIFT

(11) **EP 0 414 127 B1**
(45) Veröffentlichungstag und Bekanntmachung des Hinweises auf die Patenterteilung: **21.09.1994**
(21) Anmeldenummer: 90115685.1
(22) Anmeldetag: 16.08.1990
(51) Int. Cl.: F04D 19/04, F16C 32/04

(54) **Magnetgelagerte Vakuumpumpe**
Vacuum pump with magnetic bearing
Pompe à vide avec palier magnétique

(30) Priorität: 25.08.1989 DE 3928047; 22.09.1989 DE 3931661
(43) Veröffentlichungstag der Anmeldung: 27.02.1991
(73) Patentinhaber: LEYBOLD AKTIENGESELLSCHAFT, D-63450 Hanau (DE); FORSCHUNGSZENTRUM JÜLICH GMBH, 52425 Jülich (DE)
(72) Erfinder: Kabelitz, Hans-Peter, Dr., D-5000 Köln 90 (DE); Lässig, Harald, D-3550 Marburg (DE); Schneider, Helmut, D-5352 Zülpich (DE)
(74) Vertreter: Leineweber, Jürgen, Dipl.-Phys.

(56) Entgegenhaltungen:
- CH-A- 663 066
- DE-A- 2 501 218
- DE-A- 2 741 062
- DE-A- 3 019 227
- DE-B- 2 349 033
- DE-B- 2 658 687

## Beschreibung

Die Erfindung bezieht sich auf eine Molekular oder Turbomolekularvakuumpumpe mit einem einen Rotor und eine Welle umfassenden rotierenden System, welches sich über Magnetlagerungen im Gehäuse der Vakuumpumpe abstützt, und mit zwei Notlauflagern, deren Ort derart gewählt ist, daß sich der Schwerpunkt des rotierenden Systems zwischen den Notlauflagern befindet.

Notlauflager haben die Aufgabe, zu Schäden führende Abweichungen des Rotors von seiner Soll-Lage zu verhindern. Ursache für radiale Auslenkungen sind in der Regel Erschütterungen oder seitliche Stöße gegen die Pumpe. Axiale Abweichungen von der Soll-Lage treten beispielsweise dann ein, wenn es zu Lufteinbrüchen im Rotorbereich oder im angeschlossenen Rezipienten kommt. Bei aktiven Magnetlagerungen treten Abweichungen des Rotors von seiner Soll-Lage auch dann ein, wenn die Regelung ausfällt.

Notlauflager für Molekular- oder Turbomolekularpumpen sind typischerweise trocken laufende Lager, da Fett- oder Ölschmierungen die Qualtität des von der Pumpe erzeugten Vakuums beeinträchtigen. Der Vorteil der Magnetlagerungen, nämlich ihre absolute Schmiermittel- und damit Kohlenwasserstoff-Freiheit würde dadurch aufgehoben. Die Lebensdauer trocken laufender Lager ist begrenzt. Es besteht deshalb die Forderung, daß der Rotor nach Abweichungen von der Soll-Lage, bei denen es zu einem Einsatz der Notlauflager kommt, möglichst schnell wieder seine Soll-Lage einnimmt, damit eine übermäßige Beanspruchung der Notlauflager vermieden ist. Bei Versuchen mit einem Prototypen war jedoch immer wieder beobachtet worden, daß der Rotor nach seitlichen Stößen gegen die Pumpe an den Notlauflagern "kleben" blieb.

Aus der DE-A-27 41 062 ist eine Vakuumpumpe der eingangs erwähnten Art bekannt. Der Schwerpunkt des rotierenden Systems liegt zwischen zwei axial voneinander beabstandeten Magnetlagerungen. Genauere Angaben über die Lage des Schwerpunktes sind jedoch nicht offenbart. Auch Hinweise auf das Problem des "Klebens" des Rotors an den Notlauflagern enthält das Dokument nicht. Zum Stand der Technik gehört auch noch der Inhalt der DE-B-26 58 687, welche eine Welle mit insgesamt drei Lagerungen offenbart. Die mittlere Lagerung ist als Magnetlager ausgebildet. Die beiden äußeren Lagerungen können mechanische Lager oder Magnetlager sein. Es ist nicht auszuschließen, daß der Schwerpunkt des rotierenden Systems im Bereich des mittleren Lagers liegt. Genauere Hinweise auf die Lage des Schwerpunktes sind jedoch ebenfalls nicht offenbart. Hinweise auf Notlauflagerungen fehlen.

Der vorliegenden Erfindung liegt die Aufgabe zugrunde, bei einer Vakuumpumpe der eingangs erwähnten Art die Notlauflager so anzuordnen, daß unnötige Beanspruchungen vermieden werden.

Erfindungsgemäß wird diese Aufgabe dadurch gelöst, daß der Ort der Notlauflager derart gewählt ist, daß der Abstand der beiden Notlauflager vom Schwerpunkt des Rotors etwa gleich ist. Überraschenderweise hat sich gezeigt, daß es bei einer derartigen Anordnung der Notlauflager zum Schwerpunkt des rotierenden Systems nicht zu dem beobachteten "Kleben" des Rotors an den Notlauflagern kommt. Offensichtlich sind die Kräfte, die zum Lösen der Welle von den Notlauflagern erforderlich sind, bei der erfindungsgemäßen Konstruktion am geringsten.

Beim Vorhandensein von zwei Magnetlagern hat es sich als besonders vorteilhaft erwiesen, wenn sich im Bereich des Schwerpunktes eine der beiden Magnetlagerungen des Rotors befindet. Bei dieser Lösung nimmt das rotierende System nach einer Erschütterung sehr schnell seine Soll-Lage wieder ein.

Weitere Vorteile und Einzelheiten sollen anhand eines in der Figur dargestellten Ausführungsbeispieles erläutert werden.

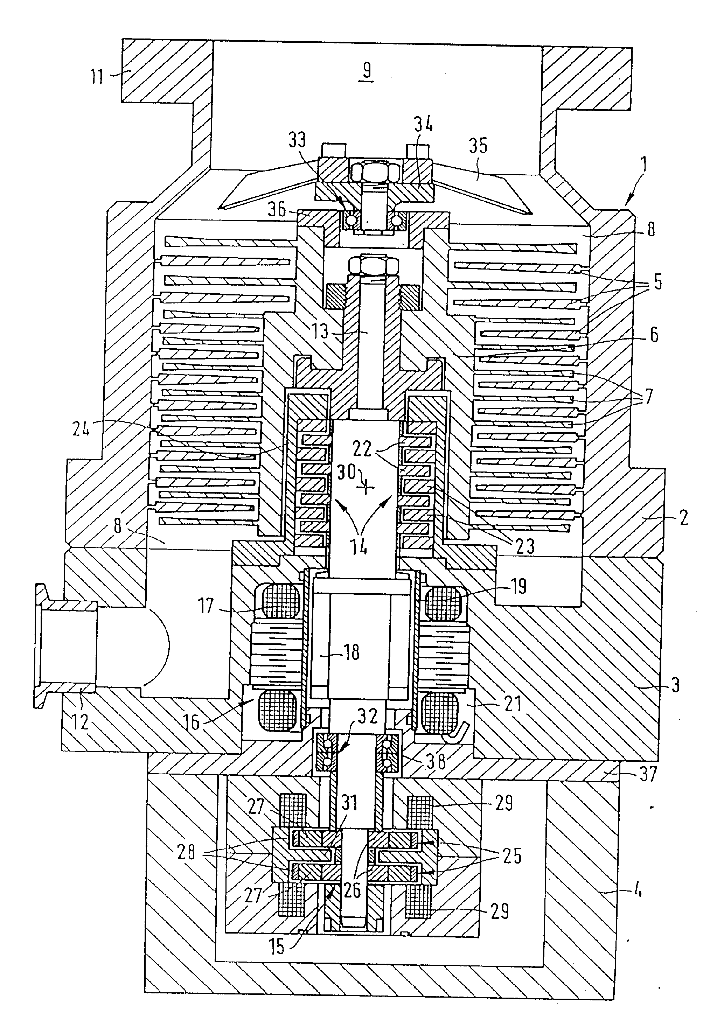

Die in Figur 1 dargestellte Turbomolekularvakuumpumpe 1 weist die Gehäuseteile 2, 3 und 4 auf. Das Gehäuseteil 2 bildet gleichzeitig den Stator und trägt die Statorschaufeln 5. Die Statorschaufeln 5 und die am Rotor 6 befestigten Rotorschaufeln 7 sind wechselnd in Reihen angeordnet und bilden den ringförmigen Gasförderkanal 8. Der Gasförderkanal 8 verbindet den Einlaß 9 der Pumpe 1, gebildet vom Anschlußflansch 11, mit dem Auslaß 12, an den üblicherweise eine Vorvakuumpumpe angeschlossen ist.

Der Rotor 6 ist auf einer Welle 13 befestigt, die sich ihrerseits über Magnetlagerungen 14 und 15 im Gehäuse der Pumpe 1 abstützt. Zwischen den beiden Magnetlagerungen 14 und 15 befindet sich der Antriebsmotor 16, der von der Spule 17 und dem mit der Welle 13 rotierenden Anker 18 gebildet wird. Der Antriebsmotor 16 ist als Spaltrohrmotor ausgebildet. Das zwischen Spule 17 und Anker 18 angeordnete Spaltrohr ist mit 19 bezeichnet. Die Spule 17 befindet sich in einem vom Spaltrohr und vom Gehäuseteil 3 gebildeten Raum 21, der für die von der Pumpe 1 geförderten Gase nicht zugänglich ist.

Das obere Magnetlager 14 ist als passives Magnetlager ausgebildet. Es besteht aus rotierenden Ringscheiben 22, welche auf der Welle 13 befestigt sind, und ortsfesten Ringscheiben 23, die von der Hülse 24 umgeben sind.

Das weitere Magnetlager 15 ist teilweise aktiv (in axialer Richtung) und teilweise passiv (in radialer Richtung) ausgebildet. Um dieses zu erreichen, sind auf der Welle 13 Ringscheiben 25 befestigt, welche jeweils aus einem Nabenring 26, einem Permanentmagnetring 27 und einem Armierungsring 28 bestehen. Diese Armierungsringe haben die Aufgabe, Zerstörungen der Permanentmagnetringe 27 infolge der hohen Fliehkräfte zu vermeiden.

Den rotierenden Permanentringen 27 sind feststehende Spulen 29 zugeordnet. Diese bilden Magnetfelder, die mit Hilfe des durch die Spulen fließenden Stromes veränderbar sind. Die Änderungen des Spulenstromes erfolgen in Abhängigkeit von Axialsensoren, welche nicht dargestellt sind. Im Spalt zwischen den mit der Welle rotierenden Ringscheiben 25 befindet sich eine feststehende Ringscheibe 31 aus nicht magnetisierbarem Material hoher elektrischer Leitfähigkeit. Dieses Material bewirkt eine Lagerstabilisierung mit wirkungsvoller Wirbelstromdämpfung. Ein dem Magnetlager 15 entsprechendes Lager ist in der europäischen Patentschrift 155 624 offenbart.

Der Schwerpunkt des rotierenden Systems ist mit 30 bezeichnet. Mit 32 und 33 sind Notlauflager bezeichnet. Das obere Notlauflager 33 ist an einem zentralen Träger 34 befestigt, der sich im Einlaßbereich 9 der Pumpe 1 befindet und über Stützen 35 am Gehäuseteil 2 abstützt. Dem Lager 33 ist am Rotor 6 eine Hülse 36 zugeordnet. Zwischen der Innenwand der Hülse 36 und dem Außenrig des Lagers 33 ist ein Spalt vorgesehen, so daß diese Bauteile einander nicht berühren, wenn der Rotor seine Soll-Lage hat. Führen größere Erschütterungen zu entsprechend größeren radialen Auslenkungen der Rotordrehachse, dann kommt ein Kontakt zwischen der Innenwand der Hülse 36 und dem Außenring des Notlauflagers 33 zustande. Der Spalt zwischen Lager 33 und Hülse 36 ist so bemessen, daß die radialen Auslenkungen auf ein zulässiges Maß begrenzt sind.

Als für die erwünschte Funktion wesentlich hat sich herausgestellt, daß am Rotor eine das Lager 33 von außen umfassende Hülse 36 vorgesehen ist. Dabei kann das Lager 33 am ruhenden Teil oder an der rotierenden Hülse befestigt sein.

Das untere Notlauflager 32, das mit der Welle 13 rotiert, hat zusätzlich die Aufgabe, schädliche axiale Abweichungen des Rotors 6 von der Soll-Lage zu verhindern. Dazu ist im Zwischenflansch 37 zwischen den Gehäuseteilen 3 und 4 eine zylindrische Ausnehmung 38 mit radialen Abstufungen vorgesehen, auf die sich der Außenring des Lagers 32 bei übermäßigen axialen Verschiebungen des Rotors 6 (z. B. bei einem Lufteinbruch im Einlaßbereich der Pumpe) aufsetzt. Zweckmäßig umfaßt das untere Notlauflager zwei Schulterlager, die so gepaart sind, daß die Schultern der Lageraußenringe benachbart sind bzw. - in Bezug auf die Berührungsebene der Lager - innen liegen. Schulterlager dieser Art können hohe Axialkräfte aufnehmen und weisen ein geringes Axialspiel auf, was insbesondere bei magnetgelagerten Turbomolekularpumpen erwünscht ist.

Die Notlauflager 32, 33 sind derart angeordnet, daß ihr Abstand vom Schwerpunkt 30, in dessen Bereich sich das besonders starke Magnetlager 14 befindet, gleich ist. Diese Maßnahmen haben die Wirkung, daß das rotierende System nach einer Erschütterung, bei der es zu einem Einsatz der Notlauflager 32, 33 kommt, nach sehr kurzer Zeit wieder seine Soll-Lage einnimmt.

## Patentansprüche

1. Molecular oder Turbomolekularvakuumpumpe (1) mit einem einen Rotor (6) und eine Welle (13) umfassenden rotierenden System, welches sich über Magnetlagerungen (14, 15) im Gehäuse der Vakuumpumpe abstützt, und mit zwei Notlauflagern (32, 33) deren Ort derart gewählt ist, daß sich der Schwerpunkt (30) des rotierenden Systems zwischen den Notlauflagern befindet, dadurch gekennzeichnet, daß der Abstand der Notlauflager (32, 33) vom Schwerpunkt (30) etwa gleich ist.

2. Pumpe nach Anspruch 1, dadurch gekennzeichnet, daß sie mit zwei Magnetlagerungen (14, 15) ausgerüstet ist und daß sich das eine (14) der beiden Magnetlagerungen (14, 15) im Bereich des Schwerpunktes (30) befindet.

3. Pumpe nach Anspruch 1 oder 2, dadurch gekennzeichnet, daß sich bei senkrechter Anordnung der Pumpe (1) das obere Notlauflager (33) oberhalb des Rotors (6) und das untere Notlauflager (32) unterhalb des Antriebsmotors (16) befindet.

4. Pumpe nach Anspruch 1, 2 oder 3, dadurch gekennzeichnet, daß am Rotor (6) eine Hülse (36) angeordnet ist, die mit ihrer Innenwandung das obere Notlauflager umfaßt.

5. Pumpe nach Anspruch 4, dadurch gekennzeichnet, daß das obere Notlauflager (33) bei Normalbetrieb der Pumpe ruht.

6. Pumpe nach einem der Ansprüche 1 bis 5, dadurch gekennzeichnet , daß das untere Notlauflager (32) auf der Welle (13) des rotierenden Systems angeordnet ist und daß dem Außenring des Notlauflagers radiale Abstufungen im Gehäuse der Pumpe (1) zugeordnet sind.

7. Pumpe nach Anspruch 6, dadurch gekennzeichnet, daß das untere Notlauflager (32) zwei Schulterlager umfaßt.

8. Pumpe nach Anspruch 7, dadurch gekennzeichnet, daß die Schulterlager so gepaart sind, daß die Schultern der Lageraußenringe benachbart sind.

9. Turbomolekularvakuumpumpe nach einem der vorhergehenden Ansprüche mit einem Rotor (6), der sich über zwei Magnetlagerungen (14, 15) im Gehäuse der Vakuumpumpe abstützt, und mit zwei trockenlaufenden Notlauflagern (32, 33); der Ort der Notlauflager (32, 33) ist derart gewählt, daß sich der Schwerpunkt (30) des rotierenden Systems zwischen den Notlauflagern befindet; der Abstand der Notlauflager (32, 33) vom Schwerpunkt ist etwa gleich; im Bereich des Schwerpunktes (30) ist ein Permanentmagnetlager (14) angeordnet; der auf der Welle (13) des rotierenden Systems angeordnete Anker (18) des Antriebsmotors befindet sich zwischen dem Schwerpunkt (30) und dem einen Notlauflager (32); das zweite Magnetlager (15), das teilweise aktiv und teilweise passiv ausgebildet ist, ist auf dem dem Rotor (6) der Turbomolekularpumpe gegenüberliegenden Ende der Welle (13) derart angeordnet, daß sich das Notlauflager (32) zwischen Antriebsmotor und Magnetlager (15) befindet.

10. Pumpe nach einem der vorhergehenden Ansprüche, dadurch gekennzeichnet, daß der Antriebsmotor (17, 18) als Spaltrohrmotor ausgebildet ist.

## Claims

1. Vacuum pump, preferably turbo-molecular vacuum pump (1) with a rotating system comprising a rotor (6) and a shaft (13) which is supported in the housing of the vacuum pump via magnetic bearings (14, 15), and with two emergency bearings (32, 33) whose location is selected in such a way that the centre of gravity (30) of the rotating system is between the emergency bearings, characterized in that the distance between the emergency bearings (32, 33) and the centre of gravity (30) is approximately equal.

2. Pump according to Claim 1, characterized in that it is equipped with two magnetic bearings (14, 15) and that one (14) of the two magnetic bearings (14, 15) is in the area of the centre of gravity (30).

3. Pump according to Claim 1 or 2, characterized in that with vertical arrangement of the pump (1) the upper emergency bearing (33) is above the rotor (6) and the lower emergency bearing (32) is below the drive motor (16).

4. Pump according to Claim 1, 2 or 3, characterized in that a sleeve (36) which surrounds the upper emergency bearing with its internal wall is arranged on the rotor (6).

5. Pump according to Claim 4, characterized in that the upper emergency bearing (33) is at a standstill when the pump is operating normally.

6. Pump according to one of Claims 1 to 5, characterized in that the lower emergency bearing (32) is arranged on the shaft (13) of the rotating system and that radial gradations in the housing of the pump (1) are allocated to the outer ring of the emergency bearing.

7. Pump according to Claim 6, characterized in that the lower emergency bearing (32) comprises two shoulder bearings.

8. Pump according to Claim 7, characterized in that the shoulder bearings are paired in such a way that the shoulders of the bearing outer rings are adjacent.

9. Turbo-molecular vacuum pump according to one of the preceding Claims with a rotor (6) which is supported in the housing of the vacuum pump via two magnetic bearings (14, 15), and with two dry emergency bearings (32, 33); the location of the emergency bearings (32, 33) is selected in such a way that the centre of gravity (30) of the rotating system is between the emergency bearings; the distance between the emergency bearings (32, 33) and the centre of gravity is approximately equal; a permanent magnet bearing (14) is arranged in the area of the centre of gravity (30); the drive motor armature (18) arranged on the shaft (13) of the rotating system is between the centre of gravity (30) and the one emergency bearing (32); the second magnetic bearing (15) which is partially active and partially passive is arranged on the end of the shaft (13) opposite the rotor (6) of the turbo-molecular pump in such a way that the emergency bearing (32) is between drive motor and magnetic bearing (15).

10. Vacuum pump according to one of the preceding Claims, characterized in that the drive motor (17, 18) is in the form of a canned motor.

## Revendications

1. Pompe à vide, de préférence pompe à vide turbomoléculaire (1) avec un système en rotation qui comprend un rotor (6) et un arbre (13), ledit système s'appuyant dans le boîtier de la pompe à vide au moyen de paliers magnétiques (14, 15), et comportant deux paliers de secours (32, 33) dont l'emplacement est choisi de telle manière que le centre de gravité (30) du système en rotation se trouve entre les paliers de secours, caractérisé en ce que la distance entre les paliers de secours (32, 33) et le centre de gravité (30) est approximativement égale.

2. Pompe selon la revendication 1, caractérisée en ce qu'elle est équipée de deux paliers magnétiques (14, 15), et en ce que l'un des deux paliers magnétiques (14) est situé dans la région du centre de gravité (30).

3. Pompe selon l'une ou l'autre des revendications 1 et 2, caractérisée en ce que lorsque la pompe (1) est agencée verticalement, le palier de secours supérieur (33) est situé au-dessus du rotor (6) et le palier de secours inférieur (32) est situé au-dessous du moteur d'entraînement (16).

4. Pompe selon quelconque des revendications 1, 2 ou 3, caractérisée en ce qu'une douille (36) est agencée sur le rotor (6), ladite douille entourant par sa paroi intérieure le palier de secours supérieur.

5. Pompe selon la revendication 4, caractérisée en ce que le palier de secours supérieur (33) est au repos lors du fonctionnement normal de la pompe.

6. Pompe selon l'une quelconque des revendications 1 à 5, caractérisée en ce que le palier de secours inférieur (32) est agencé sur l'arbre (13) du système en rotation, et en ce que des gradins radiaux dans le boîtier de la pompe (1) sont associés à la bague extérieure du palier de secours.

7. Pompe selon la revendication 6, caractérisée en ce que le palier de secours inférieur (32)comporte deux paliers à épaulement.

8. Pompe selon la revendication 7, caractérisée en ce que les paliers à épaulement sont associés par paire, de telle manière que les épaulements des bagues extérieures de palier sont voisins.

9. Pompe à vide turbomoléculaire selon l'une quelconque des revendications précédentes, comprenant un rotor (6), qui s'appuie dans le boîtier de la pompe à vide au moyen de deux paliers magnétiques (14, 15), et comportant deux paliers de secours (32, 33) fonctionnant à sec ; l'emplacement des paliers de secours (32, 33) étant choisi de telle manière que le centre de gravité (30) du système en rotation se trouve entre les paliers de secours ; la distance entre les paliers de secours (32, 33) et le centre de gravité étant approximativement égale ; un palier magnétique à aimant permanent (14) étant agencé dans la région du centre de gravité (30) ; l'armature (18) du moteur d'entraînement, agencée sur l'arbre (13) du système en rotation, se trouve entre le centre de gravité (30) et l'un des paliers de secours (32); le second palier magnétique (15), qui est réalisé partiellement actif et partiellement passif, est agencé sur l'extrémité de l'arbre (13) opposée au rotor (6) de la pompe turbomoléculaire, de telle manière que le palier de secours (32) se trouve entre le moteur d'entraînement et le palier magnétique (15).

10. Pompe à vide selon l'une quelconque des revendications précédentes, caractérisée en ce que le moteur d'entraînement (17, 18) est réalisé sous la forme d'un moteur à gaine.
